# EUROPÄISCHE PATENTANMELDUNG

(11) **EP 0 597 462 A2**
(43) Veröffentlichungstag der Anmeldung: **18.05.1994**
(21) Anmeldenummer: 93118222.4
(22) Anmeldetag: 10.11.1993
(51) Int. Cl.: C12C 7/14, C12C 1/16

(54) **Verfahren zum kontinuierlichen Läutern von Maische unter Verwendung von Läuterbottichschrot**

(30) Priorität: 11.11.1992 DE 4238069
(71) Anmelder: ANTON STEINECKER ENTWICKLUNGS GmbH & Co., D-85318 Freising (DE)
(72) Erfinder: Stippler, Kurt, Dr., D-85417 Marzling (DE); Wasmuth, Klaus, D-91792 Ellingen (DE)
(74) Vertreter: Grünecker, Kinkeldey, Stockmair & Schwanhäusser Anwaltssozietät

(57) **Zusammenfassung**

Die Erfindung betrifft ein Verfahren zum kontinuierlichen Läutern von Maische unter Verwendung von Läuterbottichschrot in einem Läuterbottich für die Bierherstellung, wobei der Läutervorgang zumindest teilweise unter durch Einspeisung von Inertgas in den Läuterbottich erzeugtem Überdruck durchgeführt wird.

Zur Erhöhung der Ausbeute und zur Verbesserung der Würzequalität ist erfindungsgemäß vorgesehen, daß man den Spelzenanteil (Schrotsortierung Pfungstädter Plansichter) des Schrots von hellem Gerstenmalz auf ca. 8 bis 15 % wählt.

## Beschreibung

Die Erfindung betrifft ein Verfahren zum kontinuierlichen Läutern von Maische unter Verwendung von Läuterbottichschrot in einem Läuterbottich für die Bierherstellung, wobei der Läutervorgang zumindest teilweise unter durch Einspeisung von Inertgas in den Läuterbottich erzeugtem Überdruck durchgeführt wird.

Es ist bekannt, daß der Läutervorgang einen wichtigen Verfahrensschritt bei der Bierherstellung bildet. Bekanntermaßen wird die Würze beim Läutern dadurch gewonnen, daß man die festen Bestandteile der Maische (Treber) von den flüssigen trennt. Die festen Bestandteile bleiben auf dem Boden des Läuterbottichs zurück, während die Würze dann am Boden des Behälters abgezogen werden kann. Die zuerst ablaufende Würze wird dann als Vorderwürze oder Stammwürze bezeichnet. Wenn diese abgezogen ist, bleibt in den Trebern noch eine beträchtliche Menge Extrakt zurück. Um diesen Rest zu gewinnen, werden die Treber mit heißem Wasser ausgelaugt. Dieses Verfahren nennt man dann Anschwänzen oder Überschwänzen. Das dann zuletzt von den Trebern ablaufende exaktarme Wasser wird als Glattwasser bezeichnet.

Der Treberkuchen setzt sich im Laufe des Läutervorgangs immer mehr zusammen. Es ist daher üblich, mit einer Aufhackvorrichtung, die rotierend im Läuterbottich umläuft, zumindest von Zeit zu Zeit den Treberkuchen aufzuhacken bzw. aufzulockern.

In dem deutschen Patent 41 64 296 ist nun vom selben Anmelder vorgeschlagen worden, einen derartigen typischen Läutervorgang unter Druck durchzuführen, wobei zur Erzeugung des Drucks Inertgas in den Läuterbottich eingespeist wird. Es hat sich dabei herausgestellt, daß man mit dieser Vorgehensweise die Vorderwürzeausbeute deutlich erhöhen kann.

Der Erfindung liegt die Aufgabe zugrunde, eine noch weitere Verbesserung eines solchen Läuterverfahrens herbeizuführen.

Gelöst wird diese Aufgabe dadurch, daß man den Spelzenanteil (Schrotsortierung Pfungstädter Plansichter) im Schrot zwischen 8 bis 15 % wählt.

Bei herkömmlichen Läuterverfahren hat man den Spelzengehalt beim Malz (Schrot) für den Läuterbottich zwischen 18 bis 25 % gewählt. Durch diesen Anteil an Spelzen wurde sicher gestellt, daß beim kontinuierlichen Läutern die Läuterzeiten in den vorgegebenen Grenzen geblieben sind.

Mit der erfindungsgemäßen Lösung wird nun der Spelzenanteil auf einen deutlich geringeren Prozentsatz gesetzt, trotzdem können jedoch die vorgegebenen Läuterzeiten eingehalten werden, weil in Verbindung mit der Druckausübung durch Inertgas trotz geringerem Spelzenanteil die erforderlichen Mengen innerhalb der vorgegebenen Zeiten durch den Treberkuchen gedrückt werden können.

Der geringere Spelzenanteil führt nun zu dem weiteren Vorteil, daß man höhere Sudhausausbeuten erhält und daß auch die Jodnormalität der Ausschlagwürze geringer wird. Außerdem wird auch die Blankheit der Würze besser, so daß insgesamt die Würzequalität noch weiter deutlich gesteigert wird.

In einer vorteilhaften Ausgestaltung der Erfindung wird der Spelzenanteil zwischen 10 und 12 % gewählt. Das Feinschrot mit diesem geringen Spelzenanteil kann unter Verwendung verschiedener Walzenmühlen, z.B. einer Sechswalzenmühle erzeugt werden. Vorteilhaft ist es jedoch, hierzu eine Prallmühle einzusetzen, die ebenfalls unter CO₂-Atmosphäre arbeiten kann, weil man mit einer solchen Mühle dann in einfacher Weise die erforderlichen Feinschrotmengen unter Luftabschluß (CO₂-Atmosphäre) herstellen kann.

Um den Treberkuchen, der sich aufgrund des geringen Spelzenanteils relativ fest zusammensetzt, während der Aufhackphase zuverlässig auflockern zu können, wird in weiterer Ausgestaltung der Erfindung vorgesehen, daß man unter den Senkboden im Läuterbottich, auf dem sich der Treberkuchen absetzt, Inertgas, insbesondere CO₂, unter Druck einspeist. Dieses Inertgas drückt von unten durch den Senkboden auf den Treberkuchen und lockert diesen dadurch auf, was insgesamt den Aufhackvorgang verbessert. Außerdem drückt das eingespeist CO₂ die unterhalb des Senkbodens sich ansammelnde Vorderwürze aus diesem Bereich heraus, so daß die Vorderwürzeausbeute dadurch weiter gesteigert werden kann.

In weiterer Ausgestaltung der Erfindung ist vorgesehen, daß man im Läuterbottich einen Senkboden mit einer Schlitzweite von 0,6 mm und kleiner verwendet. Damit gelangen weniger stärkehaltige Partikel beim Abläutern durch den Senkboden. Der Feststoffgehalt der Läuterwürze wird geringer und damit ergibt sich erneut eine weitere Verbesserung der Jodnormalität der Ausschlagwürze.

Ein Ausführungsbeispiel der Erfindung wird im folgenden kurz erläutert. Zur Vorbereitung des erfindungsgemäß eingesetzten Feinschrots wurde mit einer konditionierten Sechswalzenmühle Gerstenmalz sehr fein geschrotet, wobei Gerstenmalzfeinschrot für den Läuterbottich folgender Zusammensetzung (Schrotsotierung Pfungstädter Plansichter) verwendet wurde:

| | Gerstenmalz |
|---|---|
| Spelzen (%) | 12,8 |
| Grobgrieß (%) | 3,8 |
| Feingrieß I. (%) | 37,7 |
| Feingrieß II (%) | 21,8 |
| Mehl (%) | 8,5 |
| Pudermehl (%) | 10,4 |

Mit diesem Feinschrot wurde der Läutervorgang unter Ausübung von CO₂-Druck mit Druckwerten von 20 mbar durchgeführt. Es ergaben sich dabei Kaltwürzeausbeuten von 74 %, 1 % mehr gegenüber den üblichen Läuterverfahren von 73 %.

## Patentansprüche

1. Verfahren zum kontinuierlichen Läutern von Maische unter Verwendung von Läuterbottichschrot in einem Läuterbottich für die Bierherstellung, wobei der Läutervorgang zumindest teilweise unter durch Einspeisung von Inertgas in den Läuterbottich erzeugtem Überdruck durchgeführt wird, **dadurch gekennzeichnet,** daß der Spelzenanteil (Schrotsortierung Pfungstädter Plansichter) des Schrots von hellem Gerstenmalz zwischen 8 bis 15 % gewählt wird.

2. Verfahren nach Anspruch 1,**dadurch gekennzeichnet,** daß der Spelzenanteil zu 10 bis 12 % gewählt wird.

3. Verfahren nach Anspruch 1 oder 2, **dadurch gekennzeichnet,** daß man das Schrot mit einer Prallmühle unter CO₂-Atmosphäre erzeugt.

4. Verfahren nach einem der vorangegangenen Ansprüche, **dadurch gekennzeichnet,** daß man vor oder während des Aufhackvorgangs Inertgas unter Druck unter den Senkboden des Läuterbottichs eindrückt.

5. Verfahren nach wenigstens einem der vorangegangenen Ansprüche, **dadurch gekennzeichnet,** daß man im Läuterbottich einen Senkboden mit einer Schlitzweite von 0,6 mm und kleiner verwendet.
